# EUROPÄISCHE PATENTSCHRIFT

(11) **EP 2 397 726 B1**
(45) Veröffentlichungstag und Bekanntmachung des Hinweises auf die Patenterteilung: **16.01.2013**
(21) Anmeldenummer: 10006287.6
(22) Anmeldetag: 17.06.2010
(51) Int. Cl.: F16J 15/32

(54) **Verfahren zur Herstellung einer Dichtung**
Method for manufacturing a seal
Procédé de fabrication d'un joint

(43) Veröffentlichungstag der Anmeldung: 21.12.2011
(73) Patentinhaber: Carl Freudenberg KG, 69469 Weinheim (DE)
(72) Erfinder: Hintenlang, Armin, 69488 Birkenau (DE); Prinzler, Hubertus, 64668 Rimbach (DE); Wieland, Thorsten, 69221 Heidelberg (DE)

(56) Entgegenhaltungen:
- EP-A2- 1 371 992
- FR-A- 861 682
- US-A- 4 015 883
- US-A- 4 818 620

## Beschreibung

### Technisches Gebiet

Die Erfindung befasst sich mit der Herstellung einer Dichtung, die insbesondere als Radialwellendichtung eingesetzt wird und die aus einem Trägerteil mit daran angeordnetem Dichtelement besteht. Die Herstellung einer solchen Dichtung ist relativ aufwändig, da das Dichtelement bei den meisten Dichtungen mit dem Trägerteil durch Vulkanisation verbunden wird. Vor dem Vulkanisationsvorgang ist das Trägerteil mit einem Bindemittel vorbehandelt, um die Haftung des Dichtelements zu gewährleisten. Das Herstellungsverfahren wird nicht dadurch einfacher, wenn für die Verbindung des Dichtelements mit dem Trägerteil eine Klebeverbindung eingesetzt wird. Eine Klebeverbindung hat zwar den Vorteil, dass das Dichtelement als gesondertes Bauteil kostengünstig in kurzer Zeit hergestellt werden kann. Erforderlich bleibt jedoch eine Oberflächenreinigung an den Trägerteilen zumindest an der Stelle an der die Klebeverbindung hergestellt wird, um eine gute Verbindung von Dichtelement und Trägerteil zu erreichen.

### Stand der Technik

Durch die DE 10 2006 059 397 A1 ist eine Dichtung bekannt geworden, bei der das Trägerteil, dort als Stützkörper bezeichnet, L-förmig ausgebildet ist und an seinem radialen Schenkel mit einem Dichtelement aus PTFE (Polytetrafluorethylen) durch Kleben verbunden ist. Das Dichtelement hat eine dynamische Dichtlippe, mit der es an der rotierenden Welle anliegt. Für die statische Abdichtung wird der axiale Schenkel des Stützkörpers mit einem Dichtring versehen, der in eine am Schenkel gebildete Nut eingelegt wird. Auch diese Dichtung erfordert folglich einen aufwändigen Herstellungsprozess.

Ein anderes Beispiel ist aus der EP 1 371 992 A2 bekannt.

### Darstellung der Erfindung

Der Erfindung liegt die Aufgabe zugrunde, ein Herstellungsverfahren für eine Dichtung zu schaffen, dass in seinem Ablauf äußerst einfach ist und unter Verwendung von einfachsten Mitteln durchgeführt werden kann. Dabei soll die nach dem Verfahren hergestellte Dichtung leicht zu handhaben und zu montieren sein.

Die Lösung der gestellten Aufgabe erfolgt mit den Merkmalen des Anspruchs 1. Die Unteransprüche 2 bis 7 stellen vorteilhafte Ausgestaltungen des Erfindungsgedankens dar.

Bei dem erfindungsgemäßen Verfahren wird das Trägerteil gesondert hergestellt und vollständig in seinem gesamten Umfang mit einer Beschichtung versehen. Das so hergestellte Trägerteil wird mit einem ebenfalls gesondert hergestellten Dichtmelement direkt über eine Klebeverbindung zu einer Baueinheit zusammengefügt. Diese Baueinheit aus Trägerteil und Dichtelement wird sodann in eine Öffnung in einem Gehäuse eingefügt. Das Trägerteil selbst besteht aus einem Metall oder aus einem Kunststoff. Diese Beschichtung wird durch eine Tauchlackierung mit einem Polyamid hergestellt. Möglich ist aber auch eine Beschichtung aus einem Elastomer. Durch die Beibehaltung der Beschichtung am Trägerteil erhält die Dichtung in geringem Umfang auch eine Dämpfungsfunktion, die auch zur Isolierung von Schallgeräuschen beitragen kann .Die Verwendung eines gesonderten Teils für die statische Dichtigkeit entfällt, da die auf der radialen Außenfläche des axialen Schenkels des Trägerteils vorhandene Beschichtung als statisches Dichtmittel benutzt wird. Am radialen Schenkel des Trägerteils wird das Dichtelement unter Beibehalten der Beschichtung angeklebt. Dabei kann es auf einer der Seitenflächen des Trägerteils oder auch an dessen Stirnfläche angeordnet sein. Das Dichtelement selbst kann sowohl aus PTFE als auch aus einem Elastomer bestehen.

### Kurzbeschreibung der Zeichnung

Anhand der in der Zeichnung dargestellten Ausführungsbeispiele wird die Erfindung nachstehend näher erläutert.

Es zeigt:
- Fig. 1: in schematischer Darstellung einen Schnitt durch die Dichtung,
- Fig. 2: einen Schnitt durch die Dichtung bei der das Dichtelement an der zum Medium gerichteten Seite der Dichtung angeordnet ist;
- Fig. 3: eine Dichtung mit einem Dichtelement aus einem Elastomer und
- Fig. 4: eine Dichtung mit einem Dichtelement aus PTFE, das an der Stirnfläche des Trägerteils angeklebt ist.

### Ausführung der Erfindung

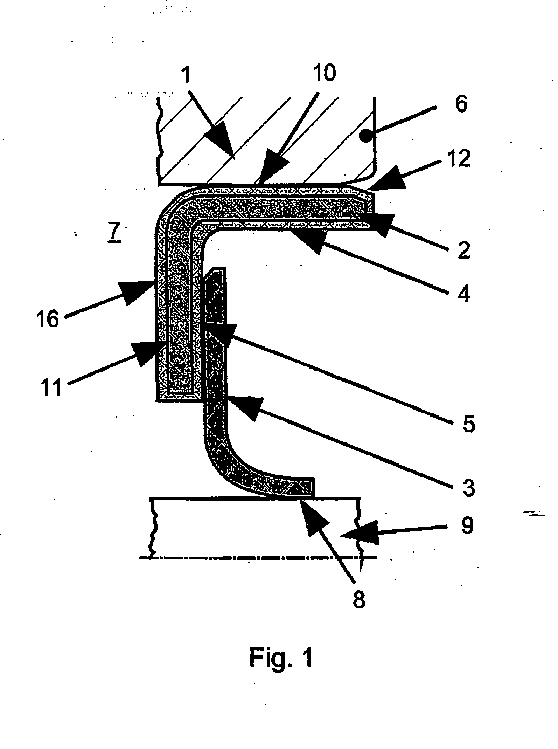

Die in der Fig. 1 sehr schematisch dargestellte Dichtung 1 besteht aus dem Trägerteil (2) und dem Dichtelement 3. Das Trägerteil 2 ist auf seinem gesamten Umfang mit der Beschichtung 4 versehen. Die Beschichtung selbst besteht aus einem Elastomer. Das Dichtelement 3 ist am radialen Schenkel 11 des Trägerteils 2 über die Klebeverbindung 5 angeklebt. Dabei bleibt die Beschichtung 4 des Trägerteils 2 auch im Klebebereich bestehen. Trägerteil 2 und Dichtelement 3 bilden eine Baueinheit 14, die in an sich bekannter Weise in eine Öffnung 7 in einem Gehäuse 6 eingefügt wird. Dabei kommt die Dichtlippe 8 des Dichtelements 3 an der Welle 9 zur Anlage und bildet die dynamische Dichtlippe. Die auf der radialen Außenfläche des axialen Schenkels 10 des Trägerteils 2 vorhandene Beschichtung 4 wird für die statische Abdichtung 12 der Dichtung 1 herangezogen. Diese Beschichtung stellt folglich hier das statische Dichtmittel dar.

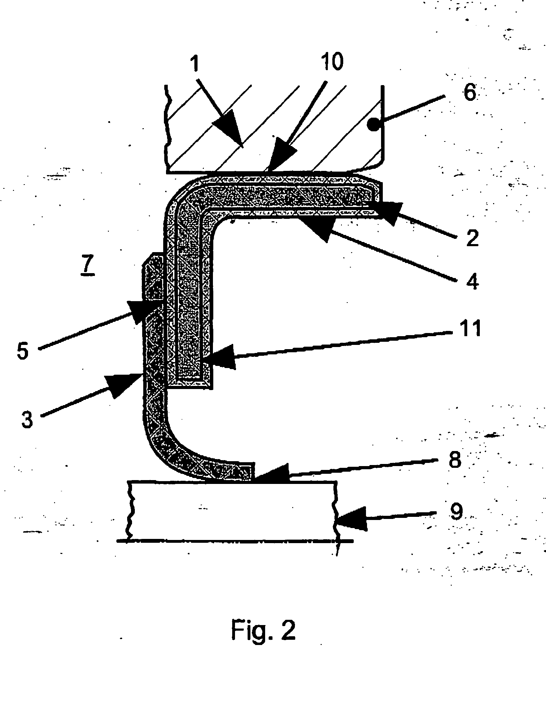

Das in der Figur 2 gezeigte Ausführungsbeispiel entspricht dem Beispiel nach Fig. 1 mit der Abweichung, dass das Dichtelement 3 auf der Seite des Trägerteils 2 angeordnet ist, welche zum abzudichtenden Innenraum weist.

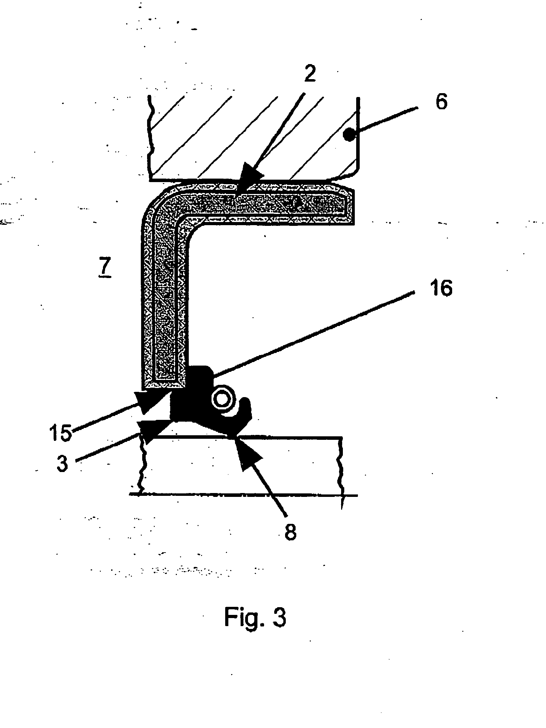

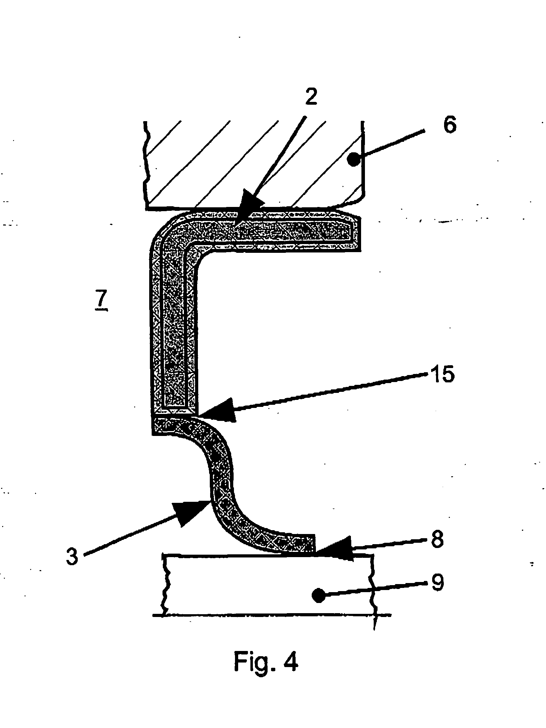

Die Fig. 3 und 4 zeigen Beispiele, bei denen die Dichtelemente 3 an den Stirnflächen 15 des Trägerteils 2 angeklebt sind. Bei der Fig. 4 wird hier ebenfalls ein PTFE-Dichtelement 3 benutzt, welches eingesetzt in die Öffnung 7 des Gehäuses 6 die Form eines S annimmt. Bei dem Dichtelement 3 nach der Fig. 3 handelt es sich um ein Dichtelement 3 aus einem Elastomer. Das Dichtelment 3 ist hier mit einer Ringnut 16 versehen, welche die innenliegende Kante des Trägerteils 2 umfasst, sodass die Klebefläche sowohl an der Stirnfläche 15 als auch an einer Seitenflächen des Trägerteils 2 vorhanden ist.

## Patentansprüche

1. Verfahren zur Herstellung einer Dichtung (1) in folgenden Schritten:
• gesonderte Herstellung eines mit einer vollständigen aus Polyamid bestehenden Beschichtung (4) versehenen Trägerteils (2), wobei die Beschichtung mit Polyamid in einer Tauchlackierung erfolgt;
• gesonderte Herstellung eines Dichtelements (3);
• Verbinden der beiden Teile über eine Klebeverbindung (5) zu einer die Dichtung (1) bildende Baueinheit;
• Einfügen der Dichtung (1) in eine Öffnung (7) in einem Gehäuse (6).

2. Verfahren zur Herstellung einer Dichtung nach Anspruch 1, **dadurch gekennzeichnet, dass** das Trägerteil (2) aus Metall besteht.

3. Verfahren zur Herstellung einer Dichtung nach Anspruch 1, **dadurch gekennzeichnet, dass** das Trägerteil (2) aus Kunststoff besteht.

4. Verfahren zur Herstellung einer Dichtung nach einem der Ansprüche 1 bis 3, **dadurch gekennzeichnet, dass** das Trägerteil (2) einen axialen Schenkel (10) hat, dessen auf der radialen Außenfläche vorhandene Beschichtung (4) das statische Dichtmittel (12) zum Gehäuse (6) ist.

5. Verfahren zur Herstellung einer Dichtung nach einem der Ansprüche 1 bis 4, **dadurch gekennzeichnet, dass** das Trägerteil (2) einen radialen Schenkel (11) hat und dass an einer seiner Seitenflächen oder an dessen Stirnfiläche (15) das Dichtelement (3) angeklebt ist.

6. Verfahren zur Herstellung einer Dichtung nach einem der Ansprüche 1 bis 5, **dadurch gekennzeichnet, dass** das Dichtelement (3) aus PTFE besteht.

7. Verfahren zur Herstellung einer Dichtung nach einem der Ansprüche 1 bis 5, **dadurch gekennzeichnet, dass** das Dichtelement (3) aus einem Elastomer besteht.

## Claims

1. Method for producing a seal (1) in the following steps:
• separate production of a carrier part (2) which is provided with a coating (4) composed completely of polyamide, the coating being carried out with polyamide in a dip coating;
• separate production of a sealing element (3);
• connection of the two parts via an adhesive connection (5) to form a structural unit (6) forming the seal (1);
- insertion of the seal (1) into an opening (7) in a housing (6).

2. Method for producing a seal according to Claim 1, **characterized in that** the carrier part (2) is composed of metal.

3. Method for producing a seal according to Claim 1, **characterized in that** the carrier part (2) is composed of plastic.

4. Method for producing a seal according to one of Claims 1 to 3, **characterized in that** the carrier part (2) has an axial limb (10), the coating (4) of which, which is present on the radial outer face, is the static sealing means (12) with respect to the housing (6) .

5. Method for producing a seal according to one of Claims 1 to 4, **characterized in that** the carrier part (2) has a radial limb (11), and **in that** the sealing element (3) is adhesively bonded to one of its side faces or to its end face (15).

6. Method for producing a seal according to one of Claims 1 to 5, **characterized in that** the sealing element (3) is composed of PTFE.

7. Method for producing a seal according to one of Claims 1 to 5, **characterized in that** the sealing element (3) is composed of an elastomer.

## Revendications

1. Procédé de fabrication d'un joint (1) comprenant les étapes suivantes:
• fabrication séparée d'une pièce de support (2) munie d'un revêtement (4) entièrement constitué de polyamide, dans lequel le revêtement avec du polyamide est effectué par un laquage par immersion;
• fabrication séparée d'un élément d'étanchéité (3);
• assemblage des deux pièces par un assemblage collé (5) en une unité de construction formant le joint (1);
• insertion du joint (1) dans une ouverture (7) dans un boîtier (6).

2. Procédé de fabrication d'un joint selon la revendication 1, **caractérisé en ce que** la pièce de support (2) est constituée de métal.

3. Procédé de fabrication d'un joint selon la revendication 1, **caractérisé en ce que** la pièce de support (2) est constituée de matière synthétique.

4. Procédé de fabrication d'un joint selon l'une quelconque des revendications 1 à 3, **caractérisé en ce que** la pièce de support (2) comprend une branche axiale (10), dont le revêtement (4) se trouvant sur la face extérieure radiale est le moyen d'étanchéité statique (12) par rapport au boîtier (6).

5. Procédé de fabrication d'un joint selon l'une quelconque des revendications 1 à 4, **caractérisé en ce que** la pièce de support (2) comprend une branche radiale (11) et **en ce que** l'élément d'étanchéité (3) est collé à une de ses faces latérales ou à sa face frontale (15).

6. Procédé de fabrication d'un joint selon l'une quelconque des revendications 1 à 5, **caractérisé en ce que** l'élément d'étanchéité (3) est constitué de PTFE.

7. Procédé de fabrication d'un joint selon l'une quelconque des revendications 1 à 5, **caractérisé en ce que** l'élément d'étanchéité (3) est constitué d'un élastomère.
